Europäisches Patentamt

European Patent Office

Office européen des brevets

(11) Numéro de publication: **0 170 565**
**A1**

## (12) DEMANDE DE BREVET EUROPEEN

(21) Numéro de dépôt: **85401310.9**

(22) Date de dépôt: **27.06.85**

(51) Int. Cl.⁴: **F 16 C 13/00**
**D 21 G 1/02, B 29 C 67/18**

(30) Priorité: **03.07.84 FR 8410536**

(43) Date de publication de la demande:
**05.02.86 Bulletin 86/6**

(84) Etats contractants désignés:
**AT BE CH DE GB IT LI LU NL SE**

(71) Demandeur: **PAPETERIES SIBILLE STENAY**

**F-55700 STENAY(FR)**

(72) Inventeur: **Anciaux, Alain**
**Paty Couze et Saint Front**
**F-24150 Lalinde(FR)**

(74) Mandataire: **Polus, Camille et al,**
**c/o Cabinet Lavoix 2, Place d'Estienne d'Orves**
**F-75441 Paris Cedex 09(FR)**

(54) **Procédé de fabrication d'un rouleau élastique de fibres utilisables comme rouleau de calandre.**

(57) L'invention a pour objet un procédé de fabrication d'un rouleau élastique de fibres, utilisable comme rouleau de calandre, ce rouleau comprenant un arbre (1) sur lequel sont empilées un grand nombre de feuilles annulaires (3) de matériau fibreux susceptible de fluer, qui sont comprimées entre deux flasques (6, 8), ledit rouleau comportant à l'une de ses extrémités au moins un perçage (16) pour l'injection de résine entre l'arbre (1) et les feuilles annulaires (3) de matériau fibreux, ce procédé étant caractérisé en ce que l'on injecte une résine thermodurcissable entre l'arbre (1) et les feuilles annulaires (3) de matériau fibreux sous une pression supérieure à 12 MPa, pour soumettre le matériau fibreux à une précontrainte.

FIG.1

EP 0 170 565 A1

La présente invention concerne un procédé de fabrication d'un rouleau élastique à base de fibres utilisable comme rouleau de calandre, notamment dans la fabrication du papier, ainsi que dans d'autres domaines tels que l'industrie textile, l'industrie du caoutchouc, l'industrie des matières plastiques.

Il est connu d'utiliser des rouleaux élastiques qui comprennent un arbre sur lequel sont empilées un grand nombre de feuilles annulaires de matériaux fibreux et qui sont comprimées entre deux flasques.

Ces rouleaux sont soumis à des contraintes mécaniques et thermiques élevées qui entraînent une limitation de la durée de vie des rouleaux. Aussi, a-t-on cherché à utiliser, pour constituer les feuilles annulaires de matériaux fibreux, des matériaux ayant de bonnes caractéristiques mécaniques et thermiques, tels que des fibres d'Aramide. Il s'avère toutefois que ce type de matériau est susceptible de fluer, compte tenu notamment de la forte compression axiale à laquelle est soumis l'empilement des feuilles annulaires de matériaux fibreux.

Il se forme par suite une cavité entre le matériau fibreux et l'arbre du rouleau. Il y a alors à la fois rupture de la continuité mécanique et de la continuité thermique. Ce phénomène entraîne une dégradation rapide des rouleaux et empêche en pratique l'utilisation de tels matériaux.

Dans le brevet US 4 283 821, on a décrit un procédé permettant de remédier à cet inconvénient. Ce procédé consiste à injecter entre l'arbre et les feuilles annulaires de matériaux fibreux une résine thermodurcissable, telle qu'une résine époxy. La résine est injectée par des perçages ménagés en partie dans les flasques et en partie dans le matériau fibreux, sous des pressions dépendant de la résine et plus spécialement dépendant des caractéristiques de retrait de la résine. Ce document ne suggère pas d'utiliser des pressions élevées.

2.

0170565

Or, la Demanderesse a trouvé qu'il était possible d'accroître fortement la durée de vie des rouleaux si l'injection de résine est effectuée sous des pressions élevées (supérieures à 12 MPa).

Ainsi, la présente invention a pour objet un procédé de fabrication d'un rouleau élastique de fibres, utilisable comme rouleau de calandre, ce rouleau comprenant un arbre sur lequel sont empilées un grand nombre de feuilles annulaires de matériau fibreux susceptible de fluer, qui sont comprimées entre deux flasques, ledit rouleau comportant à l'une de ses extrémités au moins un perçage pour l'injection de résine entre l'arbre et les feuilles annulaires de matériau fibreux, ce procédé étant caractérisé en ce que l'on injecte une résine thermodurcissable entre l'arbre et les feuilles annulaires de matériau fibreux sous une pression supérieure à 12 MPa. pour soumettre le matériau fibreux à une précontrainte.

La pression d'injection de la résine thermodurcissable est avantageusement d'au moins 15 MPa. La limite supérieure est en principe égale à la pression de serrage des feuilles annulaires de matériau fibreux, bien que, pour éviter une pénétration trop importante de la résine dans l'empilement des feuilles, il est préférable de limiter la pression d'injection à environ la moitié de la pression de serrage.

Par la mise en oeuvre du procédé selon la présente invention, on soumet volontairement le matériau fibreux à une précontrainte qui permet de retarder très fortement l'apparition de tout jeu entre l'arbre et l'empilement des feuilles annulaires de matériau fibreux,c'est-à-dire au delà de la durée de vie normale du rouleau. La mise en précontrainte s'accompagne d'une légère augmentation du diamètre du rouleau (de l'ordre de quelques millimètres).

Pour favoriser la pénétration de la résine, on découpe les feuilles annulaires de façon que le diamètre interne soit légèrement supérieur à celui de l'arbre.

Comme résine thermodurcissable, on peut utiliser des résines liquides de type époxyde ou des mélanges de résine polyester insaturée et de monomère vinylique.

Afin d'obtenir une réticulation rapide de la résine injectée, on utilise avantageusement un arbre creux que l'on chauffe par passage d'un fluide chaud tel que de l'air chaud ou de la vapeur d'eau. Un tel arbre creux permet en outre, lors de l'utilisation, d'effectuer un refroidissement du rouleau par circulation d'eau froide dans le cas d'installations suceptbiles d'entraîner un échauffement du rouleau.

L'invention sera exposée plus en détail en se référant aux dessins annexés, sur lesquels :

la Fig. 1 est une vue en coupe longitudinale d'un rouleau au cours de sa fabrication par le procédé selon l'invention;

la Fig. 2 est une vue en coupe transversale de l'arbre du rouleau de la Fig. 1.

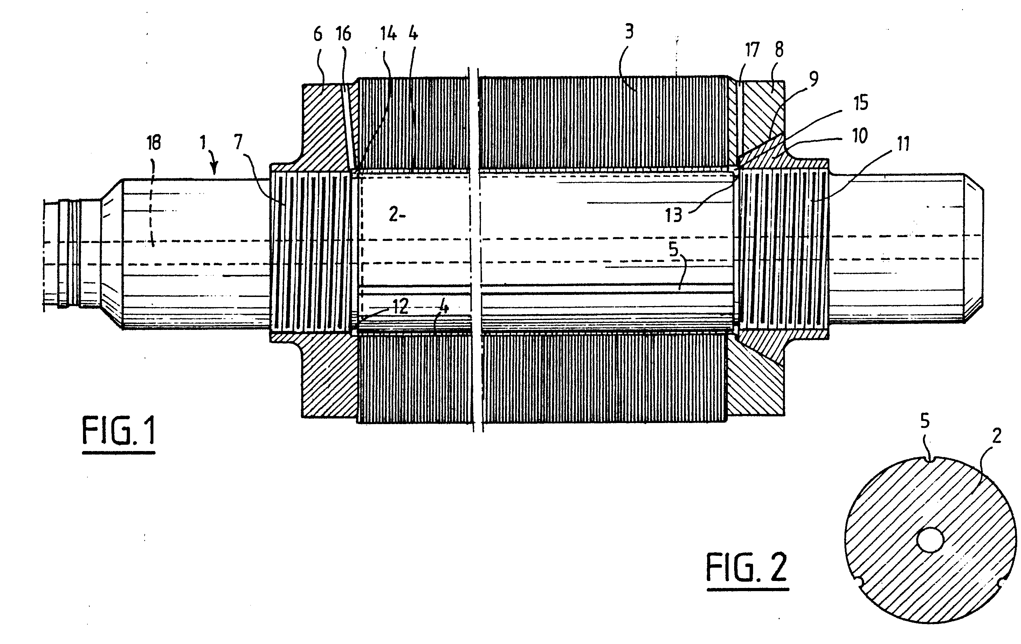

Le rouleau représenté sur la Fig. 1 comprend un arbre 1 sur la partie centrale 2 duquel sont empilées un grand nombre de feuilles annulaires 3 de matériau fibreux. Les feuilles annulaires 3 ont été découpées dans du Nomex constitué de fibres d'Aramide, avec un diamètre interne légèrement supérieur à celui de l'arbre 1, de façon à laisser un jeu 4 entre la partie centrale 2 de l'arbre et les feuilles 3.

Comme représenté sur la Fig. 2, la partie centrale 2 de l'arbre 1 comporte à sa périphérie trois rainures 5 à fond arrondi disposées à 120°. Chaque feuille annulaire 3 comporte trois bossages internes à 120° venant s'appliquer sans jeu dans les rainures 5 correspondantes de l'arbre 1, permettant ainsi le centrage des feuilles annulaires 3 sur la partie centrale 2 de l'arbre 1.

Au voisinage de l'une des extrémités de l'arbre 1 l'empilement des feuilles annulaires 3 s'appuie sur un flasque fixe 6 monté sur une partie filetée 7 de l'arbre 1.

Au voisinage de l'autre extrémité de l'arbre 1 l'empilement des feuilles annulaires 3 est maintenu par un flasque 8 comportant un évidement tronconique 9 sur lequel s'appuie un écrou 10 comportant une surface frontale tronconique correspondante. L'écrou 10 est monté sur une partie filetée 11 de l'arbre 1.

Le flasque 6 et l'écrou 10 sont montés sur l'arbre 1 avec un mastic d'étanchéité.

De même, un mastic d'étanchéité est appliqué entre le flasque 8 et l'écrou 10.

A ses deux extrémités, la partie centrale 2 comporte des gorges circulaires 12 et 13, délimitant des chambres annulaires respectivement 14 et 15.

Le flasque 6 est muni d'un perçage oblique 16 débouchant dans la chambre annulaire 14. Ce perçage 16 constitue l'orifice d'injection de la résine. Le flasque 8 est muni d'un perçage radial 17 débouchant dans la chambre annulaire 15. Ce perçage 17 sert d'évent.

L'arbre 1 est, en outre, muni d'un perçage longitudinal 18 pour le passage d'un fluide d'échange thermique.

La fabrication du rouleau est effectuée de la façon suivante.

Les feuilles annulaires 3 sont enfilées sur la partie centrale 2 de l'arbre 1 et empilées contre le flasque 6. Lorsque l'empilage est terminé, le flasque 8 est monté, puis serré par l'écrou 10 jusqu'à une pression d'environ 50 MPa.

L'arbre 1 est alors préchauffé à une température d'environ 35 à 50°C. Le rouleau est ensuite mis en position verticale, le flasque 6 se trouvant à la partie inférieure. Le rouleau est équipé de robinets branchés sur l'extrémité des perçages 16 et 17.

Une résine thermodurcissable telle qu'un mélange de résine époxyde Araldite AY 105 et de durcisseur Araldite HY 991 est alors injectée à travers le perçage 16 jusqu'à échappement de la résine par le perçage 17. On chasse ainsi complètement l'air à l'intérieur du rouleau entre la partie

0170565

centrale 2 de l'arbre 1 et l'empilement de feuilles annulaires 3. On ferme alors le robinet sur le perçage 17 et on procède à la mise en pression de la résine jusqu'à la valeur souhaitée. On peut contrôler alors l'augmentation du diamètre extérieur du rouleau.

On ferme ensuite le robinet branché sur le perçage 16 et on laisse durcir la résine.

Lorsque la résine a durci, on démonte les robinets. Puis, on amène le rouleau à son état final par usinage de sa surface sur un tour et polissage.

6.

0170565

## REVENDICATIONS

1. Procédé de fabrication d'un rouleau élastique de fibres, utilisable comme rouleau de calandre, ce rouleau comprenant un arbre (1) sur lequel sont empilées un grand nombre de feuilles annulaires (3) de matériau fibreux susceptible de fluer, qui sont comprimées entre deux flasques (6,8), ledit rouleau comportant à l'une de ses extrémités au moins un perçage (16) pour l'injection de résine entre l'arbre (1) et les feuilles annulaires (3) de matériau fibreux, ce procédé étant caractérisé en ce que l'on injecte une résine thermodurcissable entre l'arbre (1) et les feuilles annulaires (3) de matériau fibreux sous une pression supérieure à 12 MPa. pour soumettre le matériau fibreux à une précontrainte.

2. Procédé selon la revendication 1, caractérisé en ce que l'on applique une pression d'au moins 15 MPa.

3. Procédé selon la revendication 1 ou la revendication 2, caractérisé en ce que l'on utilise des feuilles annulaires (3) dont le diamètre intérieur est légèrement supérieur à celui de l'arbre (1).

4. Procédé selon l'une quelconque des revendications précédentes, caractérisé en ce que l'on ménage ledit perçage (16) entièrement dans un flasque (6).

5. Procédé selon l'une quelconque des revendications précédentes, caractérisé en ce que l'on ménage des gorges circulaires (12,13) aux extrémités de l'arbre.

6. Procédé selon l'une quelconque des revendications précédentes, caractérisé en ce que l'on utilise un arbre creux  que l'on chauffe par passage d'un fluide chaud.

FIG.2

FIG.1

**Office européen des brevets**

**RAPPORT DE RECHERCHE EUROPEENNE**

**0170565**

Numero de la demande

EP 85 40 1310

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| D,X | GB-A-2 040 020 (OY WÄRTSILA AB) <br> * En entier * <br> --- | 1-5 | F 16 C 13/00 <br> D 21 G 1/02 <br> B 29 C 67/18 |
| A | US-A-1 854 509 (J. FISH) <br> --- | | |
| A | US-A-2 987 802 (R.G. QUINN) <br> --- | | |
| A | US-A-3 291 039 (D.W.J. CHRISTIE) <br> ----- | | |

**DOMAINES TECHNIQUES RECHERCHES (Int. Cl.4)**

F 16 C
D 21 G
B 29 C

Le présent rapport de recherche a été établi pour toutes les revendications

| Lieu de la recherche <br> LA HAYE | Date d'achèvement de la recherche <br> 10-10-1985 | Examinateur <br> SZAMOCKI G.U.A. |
|---|---|---|